## Europäisches Patentamt

(19) **European Patent Office**

**Office européen des brevets**

(11) Veröffentlichungsnummer: **0 051 118**
**B1**

(12) **EUROPÄISCHE PATENTSCHRIFT**

(45) Veröffentlichungstag der Patentschrift:
**10.04.85**

(51) Int. Cl.⁴: **G 02 C 13/00**

(21) Anmeldenummer: **81106451.8**

(22) Anmeldetag: **19.08.81**

(54) **Vorrichtung zum Herstellen von Schablonen nach Brillenglasfassungen.**

(30) Priorität: **05.11.80 DE 3041664**

(43) Veröffentlichungstag der Anmeldung:
**12.05.82 Patentblatt 82/19**

(45) Bekanntmachung des Hinweises auf die Patenterteilung:
**10.04.85 Patentblatt 85/15**

(84) Benannte Vertragsstaaten:
**BE FR IT SE**

(56) Entgegenhaltungen:
**DE - A - 1 807 474**
**DE - U - 6 805 428**
**FR - A - 2 319 076**
**FR - A - 2 362 418**

(73) Patentinhaber: **Wernicke & Co. GmbH, Jägerstrasse 58,
D-4000 Düsseldorf-Eller (DE)**

(72) Erfinder: **Kötting, Friedrich, Jahnstrasse 5,
D-4047 Dormagen 5 (DE)**

(74) Vertreter: **Wangemann, Horst, Dipl.-Ing.,
Stresemannstrasse 28, D-4000 Düsseldorf (DE)**

ACTORUM AG

## Beschreibung

Die Erfindung betrifft eine Vorrichtung der im Oberbegriff des Hauptanspruches genannten Art.

Durch das DE-GM 6 805 428 ist ein Arbeits- oder Auflagetisch einer derartigen Vorrichtung bekannt. Bei einer Ausführungsform ist hierbei die Leiste oder das Lineal an seiner, der Brillenglasfassung abgekehrten Seite mit einer Platte versehen, die gegenüber einem mit dem Arbeits- oder Auflagetisch verbundenen Gewindezapfen allseitig verstellbar ist. Eine zweite Ausführungsform sieht vor, dass die Leiste oder das Lineal mit einem stangenförmigen Ansatz versehen ist, der an einem an dem Tisch drehbaren Zapfen längsverstell- und feststellbar ist.

Diesen bekannten Ausführungsformen des Arbeits- oder Auflagetisches einer Vorrichtung zum Herstellen von Schablonen nach Brillenglasfassungen gegenüber soll durch die Vorrichtung nach der Erfindung eine einfache und schnelle Handhabung der die Brillenglasfassung festhaltenden Leisten erreicht werden, wie es auch möglich sein soll, die beiden Leisten gemeinsam mit der Brillenglasfassung mindestens in einer Koordinatenrichtung verstellen zu können, was gleichfalls mit einem einfachen Handgriff durchführbar sein soll. Hierbei soll die Vorrichtung mit konstruktiv einfachen Mitteln erstellt werden können.

Zur Lösung dieser Aufgabe sieht die Erfindung die Merkmale des kennzeichnenden Teils des Hauptanspruches vor. Die Merkmale der Unteransprüche dienen der Verbesserung und Weiterbildung der Merkmale des Hauptanspruches.

Für das Einspannen der Brillenglasfassung bedarf es nur der Betätigung der einen Leiste entgegen dem Federzug oder -druck, wonach nach Heranführen und Loslassen der Leiste an die Brillenglasfassung diese selbstständig zwischen beiden Leisten gehalten wird. Hierbei ist der Federdruck derart gewählt, dass keine Verformung der Brillenglasfassung eintritt, dennoch diese in ihrer Lage beim Abtasten der Facettennut der Brillenglasfassung sich nicht verschiebt. Hierzu können beispielsweise die beiden Leisten mit einem die Brillenglasfassung nicht beeinträchtigenden Belag mit hohem Reibungskoeffizienten versehen werden. Nachdem die Brillenglasfassung zwischen den beiden Leisten eingeklemmt und hierbei die Seitenlage der Brillenglasfassung exakt festgelegt worden ist, was aufgrund der Lage des Fassungssteges beispielsweise leicht möglich ist, können nunmehr beide Leisten mit zwischen sich eingespannter Brillenglasfassung gemeinschaftlich in der zweiten Koordinatenrichtung verschoben werden und hierdurch die genaue Stellung der Brillenglasfassung auf dem Auflagetisch festgelegt werden. Hierzu bedarf es wiederum nur des Erfassens einer der beiden Leisten, um beide Leisten mit dem Brillenglas zu verschieben.

Auf der Zeichnung sind Ausführungsbeispiele der erfindungsgemässen Vorrichtung dargestellt und zwar zeigt

Fig. 1 eine perspektivische Ansicht einer Ausführungsform,

Fig. 2 eine Draufsicht auf eine weitere geringfügig gegenüber der Ausführungsform nach Fig. 1 geänderten Ausführungsform,

Fig. 4 eine weitere Ausführungsform in Draufsicht ohne Brillenglasfassung,

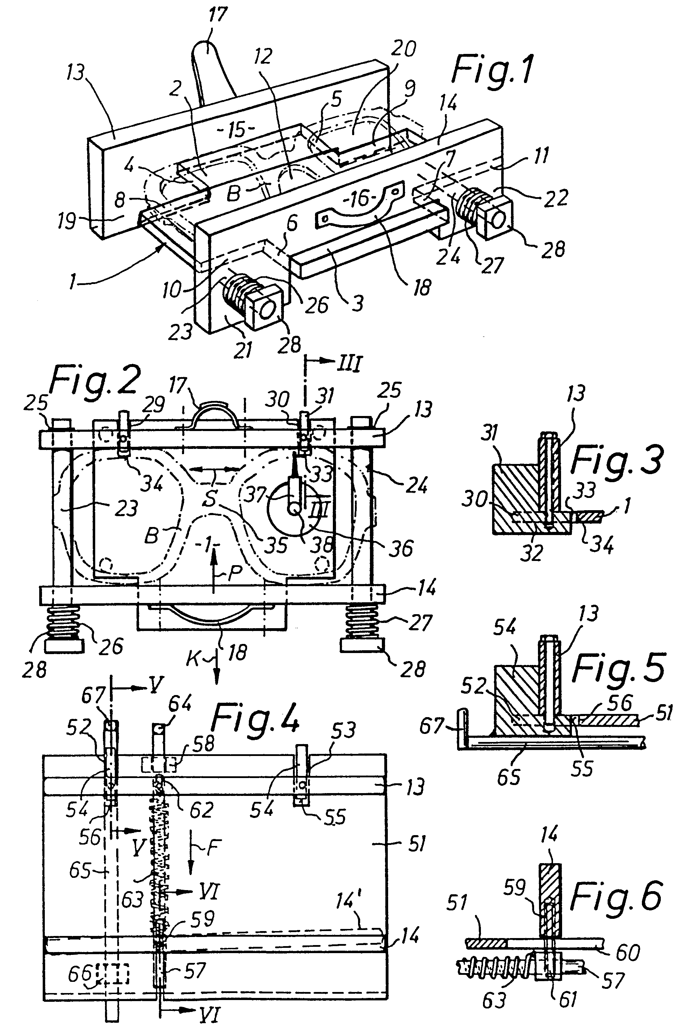

Fig. 3, 5 und 6 Schnitte nach den Linien III–III, V–V, und VI–VI der Figuren 2 und 4.

Der die Brillenglasfassung B tragende Auflagetisch 1 ist eine horizontale Platte, die in der Ausführungsform nach Fig. 1 an ihren beiden Längsseiten zwei horizontale Ansätze 2, 3 gleicher Grösse aufweist.

Hierdurch werden an den Ansätzen 2, 3 Führungskanten 4, 5 und 6, 7 gebildet, an die sich im rechten Winkel die Kanten 8, 9 und 10, 11 des Auflagetisches 1 anschliessen. Der Auflagetisch kann auf an den vier Ecken des Hauptteils 12 des Tisches angeordneten, nach unten ragenden Stützfüssen ruhen.

Die zur Anwendung gelangenden Leisten 13, 14 haben U-förmige Gestalt und tragen neben ihrem stegartigen Mittelteil 15, 16, die je mit einem Handgriff 17, 18 versehen sind, zwei nach unten ragende Schenkel 19, 20 und 21, 22, durch die paarweise je eine Stange 23, 24 geführt ist. Die Stangen und die damit verbundenen Teile nach Fig. 1 haben die gleiche Ausbildung wie dieselben Teile der Ausführungsform nach Fig. 2, weswegen diese Teile anhand der letztgenannten Figur beschrieben werden. Die beiden Stangen 23, 24 sind an ihrem einen Ende, das der Leiste 14 abgekehrt ist, mit einem O-Ring 25 versehen, während das zweite Ende der Stangen 23, 24 mit einer Druckfeder 26, 27 versehen ist, deren eines Widerlager die Leiste 14 und deren zweites Widerlager ein fest mit der Stange verbundener Kopf 28 bildet. Die Federn 26, 27 haben somit die Tendenz, die Leiste 14 auf dem Tischansatz 3 und an den Stangen 23, 24 in Richtung des Pfeiles P (Fig. 2) zu verschieben. Zwischen den beiden Leisten 13, 14 kann das Brillenglas B daher federnd eingespannt werden, wobei die Leiste 13 gegen die O-Ringe 25 der Stangen 23, 24 anliegt. Um die Leiste 14 in Richtung des Pfeiles K bewegen zu können und hierbei den Abstand der beiden Leisten 13, 14 derart zu vergrössern, dass zwischen sie die Brillenglasfassung B eingelegt werden kann, bedarf es des Festhaltens der Leiste 13, wozu bei dem Ausführungsbeispiel in Fig. 1 die Schenkel 19, 20 der Leiste 13 dienen, die gegen die Kanten 8, 9 zur Anlage kommen.

Bei der Ausführungsform nach Fig. 2 ist der Tisch 1 statt mit einem Ansatz 2 mit zwei parallelen Einschnitten 29, 30 versehen, die in Verschieberichtung der beiden Leisten 13, 14 gelegen sind. Die Leiste 13 ist hierbei mit Führungsstükken 31 versehen (Fig. 3), die mit ihrem unteren Bereich 32 in den Einschnitten 29, 30 geführt werden, wobei die vordere Kante 33 der Führungsstücke 31 gegen die Kante 34 des Einschnitts 29, 30 zur Anlage kommt, wodurch die Leiste 13 gegen ein weiteres Verschieben in Richtung des Pfeiles K gesichert und damit das Öffnen der beiden Leisten 13, 14 voneinander zum Zwecke des Einlegens der Brillenglasfassung möglich ist. Hierzu bedarf es nur der einen Hand der Bedienungsperson, während die zweite Hand die Fassung in Richtung des Doppelpfeiles S lagegerecht zwischen den beiden geöffneten Leisten 13, 14 einrichtet, wozu in bekannter Weise die Lager des Fassungssteges 35 gegenüber einer nicht dargestellten Mittellinie des Tisches 1 dienen kann.

Um die Brillenglasfassung aber auch in Richtung der Pfeile P und K entsprechend ausrichten zu können, bedarf es nur des Erfassens des Griffes 17 und des Verschiebens der beiden Leisten gemeinschaftlich mit dem eingespannten Brillenglas, nachdem die Leiste 14 an ihrem Griff 18 losgelassen wurde.

Der Tisch 1 weist in bekannter Weise eine Öffnung 36 auf, durch die der Teil 37 eines Abtastmechanismus greift, der um die Achse 38 drehbar ist und die Facettennut der Brillenglasfassung abtastet.

Bei der Ausführungsform nach Fig. 4 ist ein Auflagetisch 51 rechteckigen Formats vorgesehen, der an seiner einen Längsseite wiederum zwei parallele Einschnitte 52, 53 aufweist, in denen Führungsstücke 54 gleiten, die mit der Leiste 13 verbunden sind. Diese Führungsstücke mit ihren Kanten 55 bilden im Zusammenwirken mit der Kante 56 der Einschnitte 53, 52 den Anschlag zur Begrenzung der Bewegung der Leiste 13 in Richtung des Pfeiles F in Fig. 4. Der Leiste 14 ist eine Führungsstange 57 zugeordnet, die an der Unterseite des Auflagetisches 51 in ihrer Längsrichtung verschieblich ist und in Nähe ihres einen Endes durch einen Führungsteil 58 geführt wird, während sie in Nähe ihres anderen Endes durch die Leiste 14 gehalten und geführt wird. Hierzu besitzt die Leiste 14 einen Zapfen 59, der durch einen Längsschlitz 60 des Auflagetisches 51 ragt und mit einer Büchse 61 verbunden ist, die auf der Stange 57 befestigt ist. Die Leiste 13 besitzt ihrerseits einen durch einen Längsschlitz 62 des Auflagetisches 51 ragenden weiteren Zapfen gleich oder ähnlich dem Zapfen 59 der Leiste 14, der mit einer nicht dargestellten Buchse verbunden ist, die auf der Stange 57 gleiten kann. Die beiden Buchsen der Leisten 13, 14 sind mittels einer Zugfeder 63 miteinander verbunden, so dass die beiden Leisten 13, 14 durch Federkraft gegeneinander gezogen werden, um die Brillenglasfassung zwischen sich einzuspannen, während sie andererseits zum Einsetzen bzw. Entnehmen der Brillenglasfassung entgegen der Federkraft voneinander entfernt werden können. Durch die Schlitze 60, 62 bedingt, können die beiden Leisten 13, 14 hierbei aber in Richtung des Pfeiles F und entgegengesetzt hierzu gemeinsam verstellt werden. Das Bewegen der Leiste 14 kann hierbei mit Hilfe der Stange 57 erfolgen, da diese über die Buchse 61 verschiebefest mit dem Steg 14 verbunden ist. Bei dieser Bewegung in Richtung des Pfeiles F liegen die Kanten 55 der Führungsstücke 54 an den Kanten 56 der Einschnitte 52, 53 an und halten hierbei die Leiste 13 fest.

Um die Brillenglasfassung auf dem Tisch senkrecht zur Längserstreckung der Leisten 13, 14 verstellen zu können, genügt es bei der Ausführungsform in Fig. 1 und 2, entweder den Handgriff 17 oder den Handgriff 18 zu betätigen. Entsprechendes gilt von der Betätigung der Stange 57 mit Hilfe eines an ihrem Ende angeordneten senkrecht nach oben gerichteten Knaufes 64. Die Stange 14 kann um den Zapfen 59 leicht drehbar sein, so dass die Stange gewünschtenfalls die Stellung 14' nach Fig. 4 einzunehmen vermag.

Zusätzlich zu der Stange 57 kann das Führungsstück 54 mit einer Führungsstange 65 verbunden sein, die in einem Führungsteil 66 an der Unterseite des Auflagetisches 51 geführt wird, wobei die Stange 65 ebenfalls einen senkrecht nach oben gerichteten Knauf 67 trägt. Mit Hilfe der Stange 65 kann die Leiste 13 und über die Feder 63 die Leiste 14 verstellt werden. Die Leiste 14 kann mit der zweiten Stange 65 verbunden sein, um hierdurch eine parallele Lage der Leisten 13, 14 zu gewinnen.

**Patentansprüche**

1. Vorrichtung zum Herstellen von Schablonen nach Brillenglasfassungen (B) mit einem Auflagetisch (1) und zwei auf diesem gegen- und voneinander bewegbaren, zwischen sich die Brillenglasfassung in ihrer Abtastlage haltenden parallelen Leisten (13, 14), dadurch gekennzeichnet, dass die Leisten (13, 14) durch Federzug oder -druck unter Zwischenlage der Brillenglasfassung (B) gegeneinander verspannbar und in der gegeneinander verspannten Lage gemeinschaftlich in Richtung der Federkraft gegenüber dem Auflagetisch (1) verstellbar sind.

2. Vorrichtung nach Anspruch 1, dadurch gekennzeichnet, dass mindestens eine (14) der beiden Leisten (13, 14) in Verstellrichtung an dem Auflagetisch (1) geführt ist.

3. Vorrichtung nach Anspruch 2, dadurch gekennzeichnet, dass der Auflagetisch (1) mindestens an einer seiner Längsseiten einen Führungskanten (4, 5 bzw. 6, 7) bildenden Ansatz (2 bzw. 3) aufweist und eine der beiden Leisten (13, 14) U-förmig ausgebildet ist.

4. Vorrichtung nach Anspruch 2, dadurch gekennzeichnet, dass der Tisch (1) parallele, in Verstellrichtung verlaufende Einschnitte (29, 30; 52, 53) aufweist, in denen Ansätze (Führungsstücke 31, 54) der geführten Leiste (13) verschieblich sind.

5. Vorrichtung nach einem der Ansprüche 1 bis 4, dadurch gekennzeichnet, dass beide Leisten (13, 14) seitliche parallel zueinander angeordnete Führungsstangen (23, 24) aufweisen, die einen Endanschlag (O-Ring 25) für die eine (13) der beiden Leisten (13, 14) aufweisen.

6. Vorrichtung nach Anspruch 5, dadurch gekennzeichnet, dass an oder auf jeder der Führungsstangen (23, 24) eine Druck- oder Zugfeder (26, 27) angeordnet ist.

7. Vorrichtung nach den Ansprüchen 5 und 6, dadurch gekennzeichnet, dass die den Endanschlägen (O-Ringe 25) der Führungsstangen (23, 24) abgekehrte Leiste (14) auf oder an den Führungsstangen (23, 24) gegenüber der zweiten Leiste (13) gegen Federdruck oder -zug verschieblich ist.

8. Vorrichtung nach Anspruch 7, dadurch gekennzeichnet, dass der Begrenzungsanschlag für die Bewegung der einen Leiste (13) durch den einen Tischrand (Kanten 8, 9) oder durch den Rand (34, 56) der Einschnitte (29, 30, 52, 53) gebildet ist, in denen die Ansätze (Führungsstücke (31, 54) der Leiste (13) geführt sind.

9. Vorrichtung nach einem der Ansprüche 1 bis 8, dadurch gekennzeichnet, dass beide Leisten (13, 14) an ihrer Aussenseite je einen Handgriff (17, 18) aufweisen.

10. Vorrichtung nach einem der Ansprüche 1 bis 8, dadurch gekennzeichnet, dass unterhalb des Auflagetisches (1) mindestens eine Betätigungsstange (57) für die eine (14) der beiden, durch eine oder mehrere Zugfedern (63) aufeinanderzu gedrückte Leisten (13, 14) angeordnet und die zweite Leiste (13) in ihrer einen Bewegungsrichtung begrenzt ist.

11. Vorrichtung nach Anspruch 10, dadurch gekennzeichnet, dass beiden Leisten (13, 14) je eine Betätigungsstange (57, 65) unterhalb des Tisches (1) zugeordnet sind.

12. Vorrichtung nach Anspruch 11, dadurch gekennzeichnet, dass die eine der Leisten (14) an ihrer Führungsstange (57) schwenkbar angebracht ist.

13. Vorrichtung nach einem der Ansprüche 10 bis 12, dadurch gekennzeichnet, dass die Zugfeder (63) die Betätigungsstange (57) umschliesst.

**Revendications**

1. Dispositif pour la fabrication de gabarits d'après la monture de verres de lunettes (B) avec une table porte-pièce (1) et deux réglettes parallèles (13, 14) déplaçables sur celle-ci l'une vers l'autre et à l'opposé l'une de l'autre et maintenant entre elles la monture de verres de lunettes dans sa position d'exploration, caractérisé en ce que les réglettes (13, 14) sont déformables l'une par rapport à l'autre par une traction ou une pression à ressort lors de l'intercalation de la monture de verres de lunettes (B) et, dans la position déformée l'une par rapport à l'autre, sont réglables conjointement par rapport à la table porte-pièce (1) dans la direction de l'effort de ressort.

2. Dispositif suivant la revendication 1, caractérisé en ce qu'au moins l'une (14) des deux réglettes (13, 14) est guidée en direction du réglage sur la table porte-pièce (1).

3. Dispositif suivant la revendication 2, caractérisé en ce que la table porte-pièce (1) présente au moins sur un de ses côtés longitudinaux une saillie (2, respectivement 3) formant arête de guidage (4, 5, respectivement 6, 7) et en ce qu'une des deux réglettes (13, 14) est conformée en U.

4. Dispositif suivant la revendication 2, caractérisé en ce que la table (1) présente des découpes parallèles (29, 30; 52, 53) s'étendant dans la direction du réglage, et dans lesquelles sont déplaçables des saillies (pièces de guidage 31, 54) de la réglettes (13).

5. Dispositif suivant une quelconque des revendications 1 à 4, caractérisé en ce que les deux réglettes (13, 14) présentent des tiges de guidage latérales (23, 24) disposées parallèlement entre elles et qui présentent une butée d'extrémité (O-ring 25) pour la réglette (13) des deux réglettes (13, 14).

6. Dispositif suivant la revendication 5, caractérisé en ce qu'à ou sur chacune des tiges de guidage (23, 24) est disposé un ressort de pression ou de traction (26, 27).

7. Dispositif suivant les revendications 5 et 6, caractérisé en ce que la réglette (14) opposée aux butées d'extrémité (O-ring 25) des tiges de guidage (23, 24) est déplaçable par rapport à la seconde réglette (13) à l'encontre de la pression ou de la traction de ressort.

8. Dispositif suivant la revendication 7, caractérisé en ce que la butée de limitation pour le déplacement d'une des réglettes (13) est formée par un des bords de table (arêtes 8, 9) ou par le bord (34, 56) des découpes (29, 30; 52, 53), dans lesquelles sont guidées les saillies (pièces de guidage 31, 54) de la réglette (13).

9. Dispositif suivant une des revendications 1 à 8, caractérisé en ce que les deux réglettes (13, 14) présentent chacune sur leur face externe une poignée (17, 18).

10. Dispositif suivant une des revendications 1 à 8, caractérisé en ce que sous la table porte-pièce (1) est disposée au moins une tige de commande (57) pour l'une (14) des deux réglettes (13, 14) pressées l'une vers l'autre par un ou plusieurs ressorts de traction (63) et en ce que la seconde réglette (13) est limitée dans une de ses directions de déplacement.

11. Dispositif suivant la revendication 10, caractérisé en ce qu'à chacune des deux réglettes (13, 14) est adaptée une tige de commande (57, 65) sous la table (1).

12. Dispositif suivant la revendication 11, caractérisé en ce que l'une (14) des deux réglettes est montée de manière orientable sur sa tige de guidage (57).

13. Dispositif suivant l'une quelconque des revendications 10 à 12, caractérisé en ce que le ressort de traction (63) entoure la tige de commande (57).

**Claims**

1. A fitment for producing templates from ophthalmic mountings (B) comprising a support table (1) and two parallel bars (13 and 14) able to be moved towards and away from each other holding the ophthalmic mounting between them in a gaging position, characterized in that the bars (13 and 14) have tension or compression spring loading means urging them in relation to each other with the said ophthalmic mounting (B) therebetween and are able to be adjusted in their clamped-together position jointly in the direction of the spring force in relation to the support table (1).

2. The fitment as claimed in claim 1 characterized in that at least one (14) of the two bars (13 and 14) is guided in the direction of adjustment on the support table (1).

3. The fitment as claimed in claim 2 characterized in that the support table (1) has a head (2 or 3) on at least one of its long sides and forming guide edges (4 and 5 or 6 and 7) and one of the two bars (13 and 14) is U-like.

4. The fitment as claimed in claim 2 characterized in that the table (1) has parallel cutouts (29 and 30; 52 and 53) running in the direction of adjustment and taking up shoes (guide members 31 and 54) on the guide bar (13) for sliding motion.

5. The fitment as claimed in any one of claims 1 to 4 characterized in that the two bars (13 and 14) have side guide rods (23 and 24) placed parallel to each other and having an end stop (O-ring 25) for the one (13) of the two bars (13 and 14).

6. The fitment as claimed in claim 5 characterized by a compression or tension spring (26 and 27) acting on each of the guide rods (23 and 24).

7. The fitment as claimed in claims 5 and 6 characterized in that bar (14) furthest from the end stops (O-rings 25) of the guide rods (23 and 24) is able to be moved against the compression or tension force of a spring on the guide rods (23 and 24) in relation to the second bar (13).

8. The fitment as claimed in claim 7 characterized in that the limit stop for the motion of the one bar (13) is formed by an edge (edges 8 and 9) of the table or by an edge (34 and 56) of the cutouts (29, 30, 52 and 53), in which cutouts the heads (guide members 31 and 53) of the bar (13) are guided.

9. The fitment as claimed in any one of claims 1 to 8 characterized in that the two bars (13 and 14) each have a handle (17 and 18) on their outsides.

10. The fitment as claimed in any one of claims 1 to 8 characterized in that under the support table (1) there is at least one driving rod (57) for the one (14) of the two bars (13 and 14) that are pressed together by one or more tension springs (63) and the second bar (13) is limited in its one direction of motion.

11. The fitment as claimed in claim 10 characterized in that the two bars (13 and 14) each have a driving rod (57 and 65) under the table (1).

12. The fitment as claimed in claim 11 characterized in that the one of the bars (14) is pivotally mounted on its guide rod (57).

13. The fitment as claimed in any one of claims 10 to 12 characterized in that the tension spring (63) is placed round the driving rod (57).

0 051 118

Fig.1

Fig.2

Fig.3

Fig.4

Fig.5

Fig.6

7